# EUROPEAN PATENT SPECIFICATION

(11) **EP 1 172 632 B1**
(45) Date of publication and mention of the grant of the patent: **11.11.2009**
(21) Application number: 01116406.8
(22) Date of filing: 06.07.2001
(51) Int. Cl.: G01C 21/32, G08G 1/0969

(54) **Server, method and program for updating road information in map information providing system, and recording medium with program recorded**
Server, Verfahren und Vorrichtung für die Aktualisierung von Verkehrsnachrichten in einem System zur Bereitstellung von Karteninformationen, und gespeichertes Programm
Serveur, méthode et programme, pour mise à jour d'informations routières dans un système fournissant des informations cartographiques, et moyens d'enregistrement avec programme enregistré

(30) Priority: 06.07.2000 JP 2000205437; 04.07.2001 JP 2001203303
(43) Date of publication of application: 16.01.2002
(73) Proprietor: Pioneer Corporation, Tokyo 153-0063 (JP); Increment P Corporation, Tokyo 153-0064 (JP)
(72) Inventor: Nakano, Toshiaki, c/o Increment P Corporation, Tokyo 153-0064 (JP)
(74) Representative: Grünecker, Kinkeldey, Stockmair & Schwanhäusser Anwaltssozietät

(56) References cited:
- US-A- 4 635 202
- US-A- 5 999 878
- PATENT ABSTRACTS OF JAPAN vol. 015, no. 471 (P-1282), 28 November 1991 (1991-11-28) & JP 03 203770 A (ALPINE ELECTRON INC), 5 September 1991 (1991-09-05)

## Description

### 1. Field of the Invention

This invention relates to a server, a method and a server program for updating road information in a map information providing system and a recording medium with the sever program recorded.

### 2. Description of the Related Art

In recent years, a navigation system using a GPS (Global Positioning System) has become widespread, and a portable terminal unit inclusive of PDA (Personal Data Assistants) as well as a car navigation system has appeared.

On the other hand, electronifying of the map information has progressed. In the car navigation system, the map data recorded in the CD-ROM, DVD (Digital Versatile Disk), etc. has been widely used. In the PDA, the service of providing the map information has been carried out. The map data has a format of vector data.

A point on the map is specified by the coordinates of the latitude and longitude of a node. A road on the map is specified as a link which connects plural nodes. The place name, land mark, etc. shown on the map are stored as text data correlated with the node or link.

The maintenance of the map data are periodically carried out. The map data recorded in the CD-ROM, DVD or a large-capacity hard disk in recent years is mounted on mounted on the car navigation system or supplied to the terminal of the PDA or across the internet.

However, where there is any error inmaking the map information, this cannot be dealt with by the measure other than replacement of a recording medium used at present. In addition, it has been very difficult to collect the erroneous information. Further, changes in the road condition which have occurred frequently, particularly establishing a road cannot be dealt with. US-A- 5 999 878 concerns a method and system for acquiring differentially corrected GPS data for forming a digital database of road geometry in a geographic region. A vehicle having a GPS receiver and a DGPS demodulator is driving on roadways in the geographic region. The GPS receiver receives standard GPS signals and the DGPS demodulator receives DGPS signals, which are used by the vehicle to correct the standard GPS signals. The corrected GPS signals can be broadcast to a remote site for further processing. JP-A-03 203 770 concerns a display device of a navigation system according to map data in an automobile that can update an increased map data and display the map without requiring large space. It is the object of the present invention to provide an improved server and corresponding method for updating road information in a map information providing system that provides desired road information. This object is solved by the subject matter of the independent claims. Preferred embodiments are defined by the dependent claims.

This invention has been accomplished under the above circumstance.

An aspect of this invention is to provide a server, a method and a server program of updating road information in a map information providing system which compares/collates road network data constructed in a road network site and locus data created from present location data received every time from a terminal unit and updates the map information inclusive of the road information, thereby easily repairing map data.

In accordance with the first aspect of this invention, there is provided, a server for updating road information in a map information providing system for providing desired road information in accordance with a request from each of terminal units connected via a communication network to the server with road network data constructed therein, comprising:
location data receiving means for receiving present location data from the terminal unit via the communication network, and
road network data updating means for creating locus data on the basis of the present location data thus received to update the constructed road network data.

In the server, preferably, the road network updating means comprises:
a comparing/collating section for comparing/collating a locus data of the location data with the road network data; and
a road information updating section for updating the locus data as the road information if road data corresponding to the locus data has not set in the road network data on the basis of a result of comparing/collating.

In the server, preferably, the road network data updating means further comprises:
road information updating decision section for deciding the locus data as the road information to be updated if the locus data obtained by a prescribed number of terminal units have substantially the same locus.

In the configurations described above, the server for updating road information compares/collates the road network data previously constructed in the road network site and the locus data created on the basis of the present location data acquired every time from each of the terminal units. If the locus data has not been set on the road network data on the basis of a result of comparing/collating, the road based on the locus data can be newly founded. Since the locus data is based on the actual movement of a vehicle and man carrying the PDA or mobile telephone, if the locus data is not on the road network data, it can be decided that the locus data is based on the newly founded road. This permits a road network to be repaired easily and maintenance of the map information to be facilitated.

If the locus data is created on the basis of the present location data acquired at substantially the same location from a large number of terminal units, it can be decided reliable. Since the road network data can be updated on the basis of the locus data, a reliable road network can be constructed.

In accordance with the second aspect, there is provided, in a map information providing system for providing desired road information from a road network site with road network data constructed therein in accordance with a request fromeach of terminal units connected to the network site via a communication network, a method of updating road information, comprising the steps of: in the road network site,
receiving present location data from the terminal unit via a network;
creating a locus data on the basis of the received present location data; and
updating the road network data on the basis of the locus data.

Preferably, the above method of updating road information further comprises the steps of:
comparing/collating a locus data based on the location data with the road network data; and
updating the locus data as the road information if a road corresponding to the locus data is not set as the road network data on the basis of a result of comparing/collating.

Preferably, the method of method of updating road information further comprises the step of:
deciding the locus data as the road information to be updated on the basis of comparison/collation if the locus data obtained by a prescribed number of terminal units have substantially the same locus.

In the method for updating road information, the map information includes node data indicative of point information on a map and link data indicative of road information on the map, and the road network site correlates these data and transmits these correlated data as road data to be updated to the terminal unit according to a request therefrom.

In this configuration, these data can be effectively transmitted to a terminal unit having a small quantity of data and a small display screen area through the internet. This permits the map data inclusive of the road network data to be easily created and transmitted.

In accordance with the third aspect of this invention, there is provided a server program for a server for updating road information in a map information providing system with road network data constructed therein for providing desired road information according to a request from each of terminal units connected via a communication network, comprising:
a first step of receiving present location data from the terminal unit via the communication network, and
a second step of creating locus data on the basis of the present location data thus received to update the constructed road network data.

In the server program for a server for updating road information, preferably, the second step causes a computer to execute comprising the steps of:
comparing/collating a locus data of the location data with the road network data; and
updating the locus data as the road information if road data corresponding to the locus data has not set as the road network data on the basis of a result of comparing/collating.

In the server program for a server for updating road information, preferably, the second step causes a computer to execute comprising the step of:
deciding the locus data as the road information to be updated if the locus data obtained by a prescribed number of terminal units have substantially the same locus.

In accordance with the fourth aspect of this invention, there is provided a computer-readable storage medium which stores a server program for a server for updating road information in a map information providing system with road network data constructed therein for providing desired road information according to a request from each of terminal units connected via a communication network, wherein the sever program causes a computer to execute
a first step of receiving present location data from the terminal unit via the communication network, and
a second step of creating locus data on the basis of the present location data thus received to update the constructed road network data.

In the computer-readable storage medium which stores a server program for a server for updating road information,
the second step comprises:
comparing/collating a locus data of the location data with the road network data; and
updating the locus data as the road information if road data corresponding to the locus data has not set as the road network data on the basis of a result of comparing/collating.

In the computer-readable storage medium which stores a server program for a server for updating road information, the second step further comprises:
deciding the locus data as the road information to be updated if the locus data obtained by a prescribed number of terminal units have substantially the same locus.

The above and other objects and features of the invention will be more apparent from the following description taken in conjunction with the accompanying drawings.

### BRIEF DESCRIPTION OF THE DRAWINGS

Fig. 1 is a system configuration view showing an embodiment of a map information providing system to which this invention is applied;
Fig. 2 is a view showing an example of a vector map data;
Fig. 3 is a view showing an example of map information which are represented by the vector map data in a certain region;
Figs. 4A and 4B are tables of vector data which constitute vector map data;
Figs. 5A and 5B are tables of other vector data which constitute the vector map data;
Figs. 6A and 6B are a conversion table into text data and a table of created text map data, respectively;
Fig. 7 is a flowchart of a process of creating the text map data shown in Fig. 3 from the vector map data shown in Fig. 2;
Fig. 8 is a block diagram of functions of an internal configuration of an apparatus for updating the road information in a map information providing system according to this invention; and
Fig. 9 is a flowchart of a method for updating the road information in a map information providing system according to this invention.

### DESCRIPTION OF THE PREFERRED EMBODIMENTS

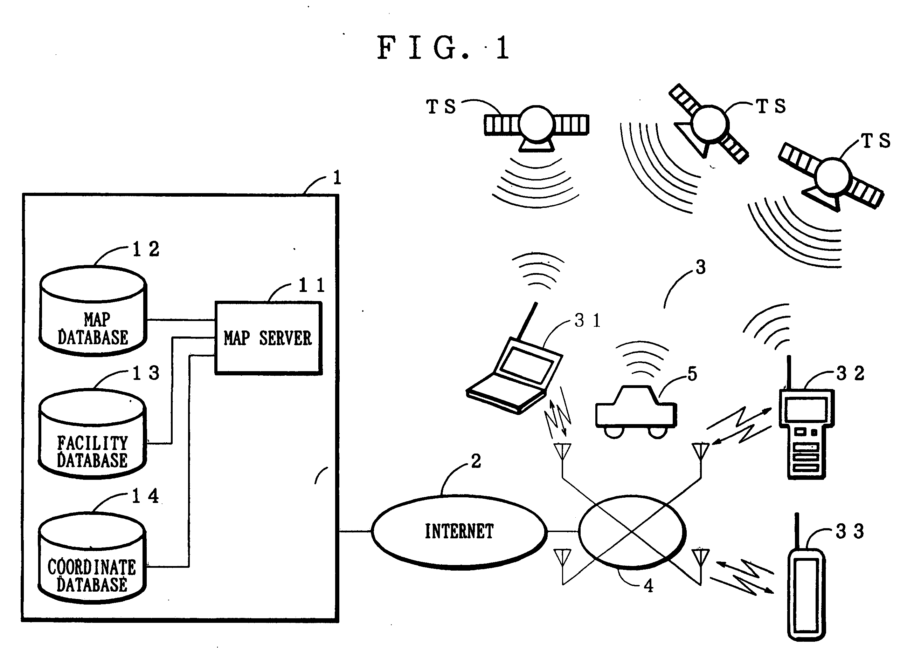

Fig. 1 is a system configuration view showing an embodiment of a map information providing system to which this invention is applied.

In Fig. 1, reference numeral 1 denotes a map database site for transmitting map data to a terminal unit 3 such as a portable or mobile telephone and PDA (Personal Digital Assistants), or a car navigation system installed on a motor vehicle (not shown) so that the map data are displayed. The map database site 1 includes a map server 11, a map database 12, a facility data base 13 and a coordinate database 14, and is connected to an internet 2.

The map database site 1 is accessed from a portable navigation system 3 equipped with a GPS (Global Positioning System) function via a computer network (internet 2 illustrated in Fig. 1) through a mobile communication network 4 and an access server. The portable navigation system 3 includes a mobile telephones 32, 33 having an internet connecting function, PDA 31, etc.

The PDA 31 can detect the position of itself with the aid of an installed GPS. The PDA 31, when it is connected to the internet 2, has a function of transmitting the location data (coordinate data represented by a longitude and latitude on a map) to the map database site 1 via the internet 2. The map server 11 serves to search map image data to provide map image data and includes a road information updating server according to this invention. The map server 11 has also a function of making speech recognition of input speech into a string of characters. In Fig. 1, reference numeral 5 denotes a navigation system for a vehicle and TS denotes a group of GPS communications satellites.

The map server 11 reads the map data inclusive of the location represented by coordinates searched and read on the basis of a string of characters indicative of an address or facility name converted from input speech and by those detected and transmitted by GPS. The map database 12 stores map image data as well as data of their coordinates (latitude and longitude) and reduced scale. The facility database 13 stores facility name and land marks exhibited on the map as well as the data of their coordinates(latitude and longitude) on the map.

The coordinate database 14 stores the coordinate data indicative of the correspondence between the string of characters indicative of an address, facility name, telephone number, etc. and coordinates of the map (longitude and latitude).

The map information providing system provides a map screen as follows.

When a user accesses the map database site 1 via the mobile communication network 4 and internet 2 with the aid of the mobile navigation system 3 (inclusive of the mobile telephones 32, 33, PDA 31) or vehicle navigation system 5 to input an address, facility name, telephone number, etc. by voice, the map server 11 in the map database site 1 converts the speech input into a string of characters.

The map server 11 searches the coordinate database 14 to compare the sting of characters with the coordinate data stored in the coordinate database 14, and then read the coordinate data indicative of the corresponding coordinate on the map.

On the basis of the coordinate data thus read, the map server 11 retrieves the map database 12 to read the map image data on the map inclusive of the location corresponding to the coordinate data. In addition, the map server 11 retrieves the facility database 13 to read the facility data indicative of the name and landmark of the facilities (nearest station, official facilities, restaurant, etc.) included in the map image data read from the map database 11.

The map server 11 transmits the map image data and facility data thus read to the mobile telephone 32, 32 or PDA 33 via the internet 2 and mobile communication network 4 so that they are displayed.

The mobile navigation system 3 can display the map image including of its own location and also the map image at any place. Where the map image including the user's own location is displayed, the map server 11 causes the mobile navigation 3 to display the position representative of the coordinate data on the map screen as a point mark. Thus, the user can easily know the place where he is.

Where the PDA 31 detects its own location using the installed GPS and transmits the coordinate data indicative of the detected own position to the map database site 1 via the mobile communication network 4 and internet 2, the map server 11 retrieves the map database 12 on the basis of the transmitted coordinate data to read out the map image data on the map including the point corresponding to the coordinate data and retrieves the facility database 13 to read out the facility data indicative of the map image read out from the map database 12 and landmark.

The map server 11 transmits the map image data and facility data and facility data as described above to the PDA 31 via the internet 2 and the mobile communication network 4 so that they are displayed on a liquid display installed on the PDA 31, mobile telephone 32, 33.

In this case, on the basis of the map data base 12, the location represented by the coordinate data is displayed as a point mark on the map screen of the display of the PDA 31, mobile telephone. Therefore, the user of the PDA 31 can easily know where he/she is now.

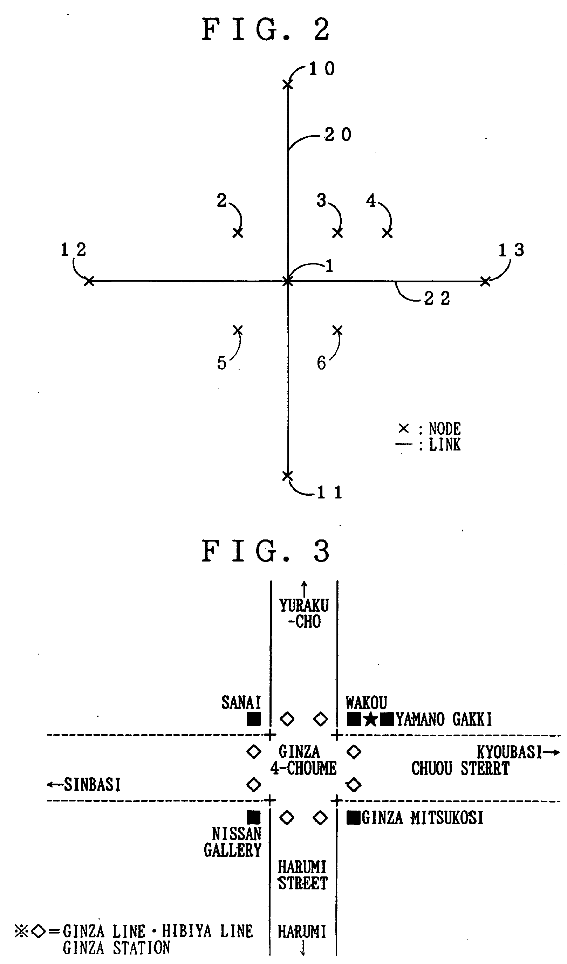

Now, the map data in a text data format (hereinafter referred to as "text map data") are created on the basis of the map data in a vector data format. Referring to Figs. 2 to 7, the method therefor will be explained.

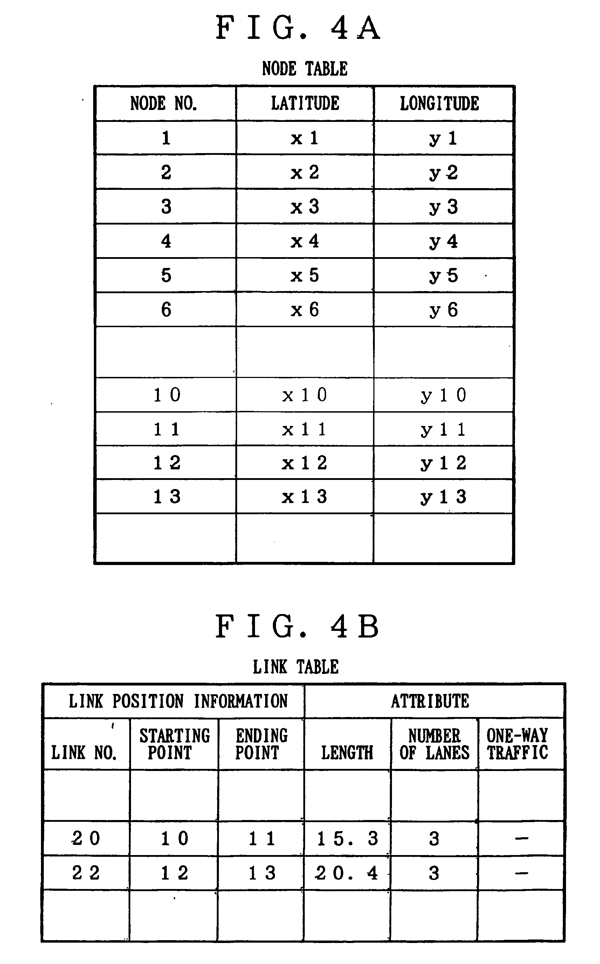

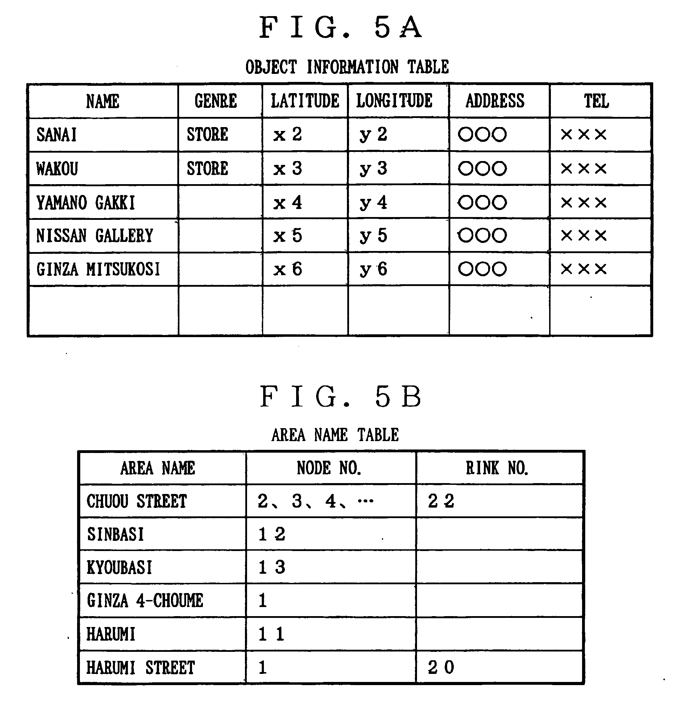

Fig. 2 shows an example of the vector map data. Fig. 3 shows an example of the map information represented by the vector map data in a certain region. Figs. 4 and 5 show examples of vector data constituting the vector map data.

The vector data of the map are composed of a node table and a link table as shown in Figs. 4A and 4B and an object information table and a region name table as shown in Figs. 5A and 5B. In the vector data, the point on a map is defined as a node and the road on the map is defined as a link.

The node table as shown in Fig. 4A exhibits a plurality of points stored as nodes. A node is correlated with the corresponding geographical coordinates (latitude and longitude) . The link table as shown in Fig. 5B exhibits a plurality of roads as links. Each link is numbered a link number. The node numbers of the starting point and ending point of the road corresponding the link number are stored.

The attribute information of the road of each link number is stored. The attribute information includes the length, number of lanes and one-way traffic or not, etc.

The object information table exhibits information on a landmark and building, etc. to be displayed on the map. Specifically, the object information table exhibits classifying information of the genre of each store, landmark; latitude and longitude; address, telephone number, etc. The area name table exhibits a name of the road and area to be exhibited on the map and the node and link correlated therewith.

In the example shown in Fig. 2, there are a road (link) 20 running vertically and a road (link) 22 running horizontally. The roads 20 and 22 are stored as link numbers 20 and 22 on the link table. On the link table, the starting point of the link 20 is node 10 whereas the ending point thereof is node 11. The starting point of the link 22 is node 12 whereas the ending point thereof is node 13. The information on the objects such as an intersection and stores corresponding to the respective nodes 1 to 6 in Fig. 2 are stored on the object information table as shown in Fig. 5A (the information on only the nodes 2 - 6 are illustrated). The area names as shown in Fig. 5B are prepared for the nodes and links shown in Fig. 2.

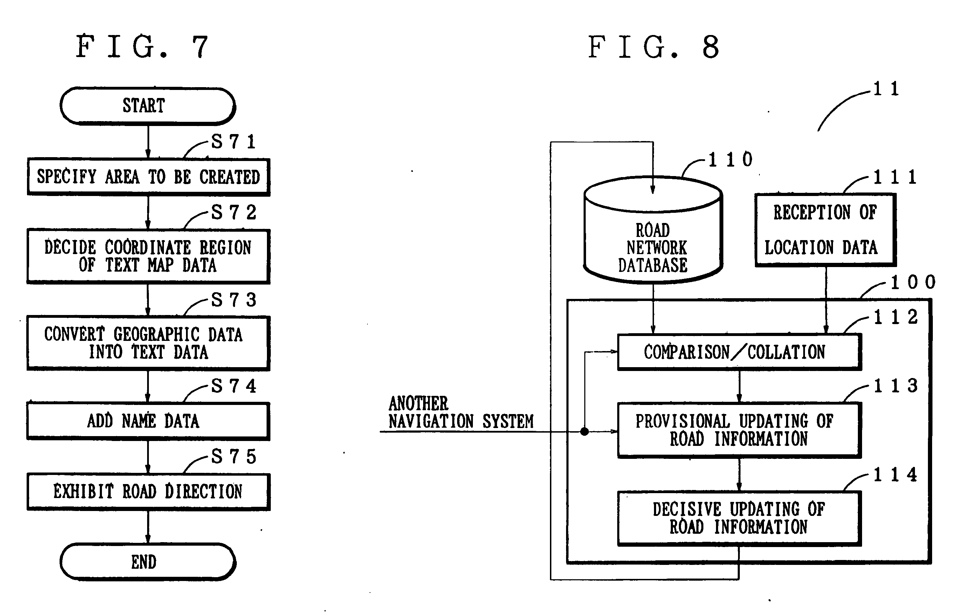

Now referring to the flow chart of Fig. 7, an explanation will be given of a method of creating the text map data shown in Fig. 3 from the vector map data shown in Fig. 2.

First, an area on which the text map data are to be created is determined (step S71). This is generally carried out by specifying an area desired by a user in terms of a latitude and longitude.

Next, the user determines the coordinate region of the text map data to be created (step S72). This is determined according to the display region when the created text map data is used. For example, where the text map data is displayed by the mobile terminal unit, according to the display region of its display device, i.e. display capability of a liquid crystal display, the x-y coordinates on which the text data can be displayed are determined.

Further, the coordinates (longitude and latitude) representing the road, building, etc. in the region specified in step S71 are converted into the corresponding coordinate values in the coordinate system within the display region, and further the vector data are converted into text data.

Although the details thereof is described later, where text data of 30 characters in a horizontal direction and 50 characters in a vertical direction can be displayed on the display region of a device for displaying the text map data, the text map data is constructed of a combination of the coordinates within the display region and the text data to be displayed.

Next, the geographical data of the vector map data are converted into the corresponding text data (step S73). The geographical data include link data representative of roads and node data representative of points. The link data are converted into the text data with respect to the link extracted from the region specified in step S71. With respect to the example shown in Fig. 1, the road of the link number 20 included in the link table in Fig. 2B is found and the relative position thereof to the region specified by step S71 is determined on the pertinent region and the data of the starting point and ending point on the link table. If the starting point and ending point of the link 20 is within the region specified in step S71, the road of the textdata is displayed at a position between these nodes.

On the other hand, where the starting point and ending point of the link 20 are outside the region specified in step S71, the road of the text data are displayed only at the position within the specified region. Thus, the position (coordinates) of the road is determined on the system of coordinates of the text map data determined in step S72. Further, the point data are converted into the corresponding text data as regards the nodes extracted from the node table. Further, the object is specified from the object information table and the text symbol indicative of the object is determined (step S73).

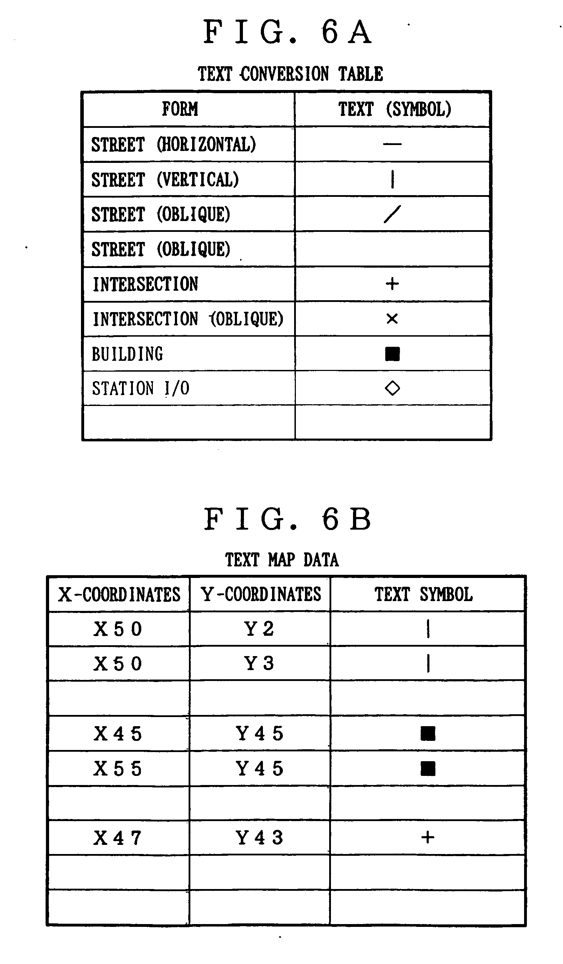

Fig. 6A shows a conversion table for the text data (symbol) . For example, a road is illustrated using the text data in such a manner that segments in vertical, horizontal and oblique directions are arranged at positions corresponding to both sides of the road as shown in Fig. 3. The width of the road at issue can be determined on the basis of the information of the number of traffic lanes. Incidentally, in the case of the one-side two or more lanes, both sides of the road are shown. In the case of the one-side one lane, the road can be shown by one segment. The point data such as an intersection and building are converted into the corresponding marks using the text conversion table.

In this way, the geographical data are converted into the text data so that the road running vertically and horizontally and geographical point (intersection, building, etc.) are illustrated by the text data as shown in Fig. 3.

Specifically, as shown in Fig. 3, the road is illustrated by a succession of the vertical and horizontal segments and the geographical point is illustrated by a figure such as a square. The text map data thus created, as seen from Fig. 6B, is constructed of the coordinates within the region where the text map data is displayed and the text data (test symbol) after conversion.

Next, the region specified in step S71 is subjected to the processing of name data (step S74). This is executed in such a manner that referring to the object information table and area name table shown in Figs. 5A and 5B, the location (longitude and latitude) of the data of the name within the specified region is converted into the corresponding coordinate within the display region of the text map data. Thus, as shown in Fig. 3, the name such as a road name and store name is displayed at the corresponding position within the display region.

The processing of designating a road direction is executed (step S75). This processing is to designate the direction and destination of the road on the map as shown like "←SINBASHI". In this processing, referring to the link table (Fig. 4B), the starting point and ending point of each link are determined, and referring to the node table (Fig. 4A) and the area name table (Fig. 5B), the area names corresponding to the nodes are acquired. In this processing, on the basis of the position of the road within the display region, the coordinates of the area within the display region are determined and the text data of the area name is arranged at the coordinates. Generally, the vector map data does not contain such destination information. In accordance with this invention, by adding the text symbol of an arrow indicative of the direction of the road to the text data indicative of the starting point and ending point of the road, the sign of the road direction can be added easily.

Thus, the processing of creating the text map data on the basis of the vector map data is completed. As shown in Fig. 6B, the text map data thus created are composed of the coordinates within the display region and the text data to be displayed at the coordinates. Therefore, a very little amount of data is required for this purpose, the transmission of data through a communication network can be executed quickly and the processing of display on the side of data reception can be executed simply and quickly.

Incidentally, where the text map data on the outskirts of a city are created, as the case maybe, buildings and stores clustered close in the specified area cannot be displayed at the corresponding positions. In such a case, only the text symbol can be displayed at the corresponding position(s) and the name and others can be displayed on a blank space (see Annotation at the left lowerposition in Fig. 3).

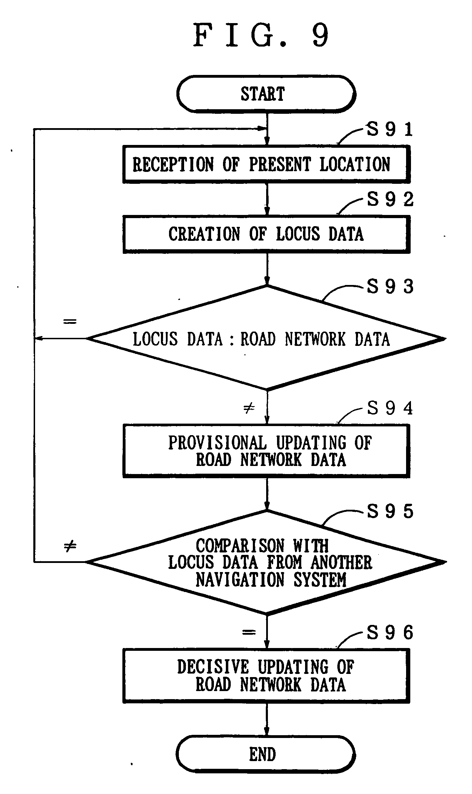

The map database 11 shown in Fig. 1 which has been created in the manner described above contains road network data. Now referring to Figs. 8 and 9, an explanation will be given of maintenance of the map data inclusive of the road network data.

Fig. 8 is a functional block diagram of an internal configuration of the road information updating server in a map information providing system according to this invention. Each of the block described below is constructed of a CPU constituting a road information updating server and a peripheral LSI inclusive of a memory. The function is realized in such a manner that the program stored in the memory is read sequentially and executed. This updating apparatus includes a road network DB 110, a location data reception section 111 and a road network data updating section 100. The road network data updating section includes a comparison/collation section 112, road information provisional updating section 113 and road information updating decision section 114.

The comparison/collation section 112 is supplied with locus data of the location data from the location data reception section 111 and the road network data from the road network DB 110. The comparison/collation result is supplied to the road information provisional updating section 113. If the road network data corresponding to the locus data is not set in the road network DB 110, the road information provisional updating section 113 provisionally updates the locus data as load information.

On the other hand, the road information provisional updating section 113 is supplied with the same result of comparison/collation from the comparison/collation section (not shown) of another navigation system. Now, if the locus data exhibit substantially the same locus in the results of comparison/collation of a prescribed number of navigation systems, the road information updating decision section 114 is actuated. Thus, on the basis of the results of comparison/collation by the comparison/collation section 114, the road information decisive updating section 114 additively writes the locus data received by the location data reception section 111 into the road network DB.

Referring to the flowchart of Fig. 9, a detailed explanation will be given of a method for updating the road information in a map information providing system according to this invention.

First, the present location data which is available from the mobile telephones 32, 33, PDA 31 or the car navigation system are sent sequentially to the map database site via the internet 2. In this example, although the present location data are sequentially sent, it is more actual to send the location data when the terminal unit deviates from the route of the road map displayed or when a suitable amount of location data has been stored.

In the map database site 1, the location data reception section 111 receives the present location data and creates the locus data from the present location data changing one after another (steps S91, S92). The locus data exhibit the locus on the road or sidewalk on the basis of the running of user's own vehicle or the actual movement of the mobile telephones 32, 33 or PDA 31.

As described above, the comparison/collation section 112 compares/collates the road network data previously constructed and the locus data (step S93). If the locus data does not exist in the road network DB 110, the road information provisional updating section 113 is actuated. The road information updating server decides that the a road has been newly established and additively writes the road based on this locus data in the road network DB 110 (step S94).

The above updating of the road information is made provisional. When the same locus data is acquired from the other many car navigation system, and mobile telephones 32, 33, or PDA 31, it is regarded reliable. Namely, the road information decisive updating section 114 determines the above updated data, thus decisively updating the road network data (steps S95, S96).

Incidentally, even when the road at issue is a road on which a vehicle can pass is decided by the map database site 1, if it can be seen on the basis of the location data from the mobile terminals 31-33 that no vehicle actually pass on the road and all the vehicles bypass to another road, it is decided that the road has disappeared. On the basis of such decision, the road network DB 110 can be updated.

Where there are locus data relative to only the car navigation system or that relative to only the mobile navigation system such as the mobile telephones 32, 33 and PDA 31, it can be decided to be that relative to the vehicle road or sidewalk, respectively. The car navigation system or mobile navigation system accesses the map database site 1 via the internet 2 to display a desired map inclusive of the present location or road exhibition.

In the embodiment described above, although the locus data was created by the road information updating server, the locus data created by the terminal unit may be sent to the server. Further, in the embodiment described above, although the network used was an open network using the internet, it may be a closed, specified or dedicated network.

Additionally, the road network data updated on the side of the server may be distributed to a flash memory incorporated in the car navigation system, and thereafter the updated road network data stored in the flash memory can be referred to.

Finally, reference is made to Japanese Patent Appln. No. 205437/2000 (filed July 6, 2000) .

## Claims

1. A server for updating road information in a map information providing system for providing desired road information in accordance with a request from each of terminal units (3) connected via a communication network to the server with road network data constructed therein, **characterized by** including:
location data receiving means (111) for receiving present location data from said terminal unit via said communication network, and
road network data updating means (100) for creating locus data on the basis of said present location data thus received to update said constructed road network data,
wherein said road network updating means (100) comprises:
a comparing/collating section (112) for comparing/collating a locus data of said location data with said road network data; and
a road information updating section for updating said locus data as the road information if road data corresponding to said locus data has not set in said road network data on the basis of a result of comparing/collating.

2. A server for updating road information according to claim 1, wherein said road network data updating means (100) further comprises:
road information updating decision section for deciding said locus data as the road information to be updated if the locus data obtained by a prescribed number of terminal units have substantially the same locus.

3. A method of updating road information in a map information providing system for providing desired road information from a road network site with road network data constructed therein in accordance with a request from each of terminal units connected to the network site via a communication network, the method **characterized by** including the steps of:
in said road network site,
receiving (S91) present location data from said terminal unit via a network;
creating (S92) a locus data on the basis of the received present location data; and
updating (S96) said road network data on the basis of said locus data by:
comparing/collating a locus data based on said location data with said road network data; and
updating said locus data as the road information if a road corresponding to said locus data is not set as said road network data on the basis of a result of comparing/collating.

4. A method of updating road information according to claim 3, further including the step of:
deciding said locus data as the road information to be updated on the basis of comparison/collation if the locus data obtained by a prescribed number of terminal units have substantially the same locus.

5. A method for updating road information according to claim 3, wherein said map information includes node data indicative of point information on a map and link data indicative of road information on the map, and said road network site correlates these data and transmits these correlated data as road data to be updated to the terminal unit according to a request therefrom.

## Patentansprüche

1. Server zum Aktualisieren von Straßeninformationen in einem Karteninformations-Bereitstellungssystem zum Bereitstellen gewünschter Straßeninformationen gemäß einer Anforderung von jeder von Endgeräteinheiten (3), die über ein Kommunikations-Netzwerk mit dem Server mit darin erstellten Straßennetzdaten verbunden sind, **dadurch gekennzeichnet, dass** er enthält:
eine Standortdaten-Empfangseinrichtung (111) zum Empfangen aktueller Standortdaten von der Endgeräteinheit über das Kommunikations-Netzwerk, und
eine Straßennetzdaten-Aktualisierungseinrichtung (100) zum Erzeugen von Ortsdaten auf Basis der so empfangenen Standortdaten, um die erstellten Straßennetzdaten zu aktualisieren,
wobei die Straßennetz-Aktualisierungseinrichtung (100) umfasst:
einen Vergleich-/Abgleichabschnitt (112) zum Vergleichen/Abgleichen von Ortsdaten der Standortdaten mit den Straßennetzdaten; und
einen Straßeninformations-Aktualisierungsabschnitt zum Aktualisieren der Ortsdaten als die Straßeninformationen auf Basis eines Ergebnisses von Vergleichen/Abgleichen, wenn Straßendaten, die den Ortsdaten entsprechen, in den Straßennetzdaten nicht eingestellt worden sind,.

2. Server zum Aktualisieren von Straßeninformationen nach Anspruch 1, wobei die Straßennetzdaten-Aktualisierungseinrichtung (100) des Weiteren umfasst:
einen Straßeninformations-Aktualisierungs-Entscheidungsabschnitt, mit dem die Ortsdaten als die zu aktualisierenden Straßeninformationen entschieden werden, wenn die durch eine vorgeschriebene Anzahl von Endgeräteinheiten bezogenen Ortsdaten im Wesentlichen den gleichen Ort aufweisen.

3. Verfahren zum Aktualisieren von Straßeninformationen in einem Straßeninformations-Bereitstellungssystem zum Bereitstellen gewünschter Straßeninformationen von einem Straßennetzort (road network site) mit darin erstellten Straßennetzdaten gemäß einer Anforderung von jeder mehrerer Endgeräteinheiten, die mit der Netzposition über ein Kommunikations-Netzwerk verbunden sind, wobei das Verfahren **dadurch gekennzeichnet ist, dass** es die folgenden Schritte einschließt:
an der Straßennetzposition
Empfangen (S91) aktueller Standortdaten von der Endgeräteinheit über ein Netzwerk;
Erzeugen (S92) von Ortsdaten auf Basis der empfangenen aktuellen Standortdaten; und
Aktualisieren (S96) der Straßennetzdaten auf Basis der Ortsdaten durch:
Vergleichen/Abgleichen von Ortsdaten auf Basis der Standortdaten mit den Straßennetzdaten; und
Aktualisieren der Ortsdaten als die Straßeninformationen, wenn eine Straße, die den Ortsdaten entspricht, nicht als die Straßennetzdaten eingestellt ist, auf Basis eines Ergebnisses von Vergleichen/Abgleichen.

4. Verfahren zum Aktualisieren von Straßeninformationen nach Anspruch 3, das des Weiteren den folgenden Schritt einschließt:
Entscheiden der Ortsdaten als die zu aktualisierenden Straßeninformationen auf Basis von Vergleichen/Abgleichen, wenn die durch eine vorgeschriebene Anzahl von Endgeräteinheiten bezogenen Ortsdaten im Wesentlichen den gleichen Ort aufweisen.

5. Verfahren zum Aktualisieren von Straßeninformationen nach Anspruch 3, wobei die Karteninformationen Knotendaten, die Punktinformationen auf einer Karte anzeigen, sowie Kantendaten enthalten, die Straßeninformationen auf der Karte anzeigen, und der Straßennetzort (road network site) diese Daten korreliert und diese korrelierten Daten als zu aktualisierende Straßendaten zu der Endgeräteinheit gemäß einer Anforderung von ihr sendet.

## Revendications

1. Serveur pour mettre à jour des informations routières dans un système de fourniture d'informations de carte pour fournir des informations routières souhaitées conformément à une demande provenant de chacune des unités terminales (3) connectées, par l'intermédiaire d'un réseau de communication, au serveur dans lequel des données de réseau routier sont élaborées, **caractérisé en ce qu'**il comprend :
des moyens de réception de données d'emplacement (111) pour recevoir des données d'emplacement actuel de ladite unité terminale par l'intermédiaire dudit réseau de communication, et
des moyens de mise à jour de données de réseau routier (100) pour créer des données de lieu sur la base desdites données d'emplacement actuel ainsi reçues pour mettre à jour lesdites données de réseau routier élaborées,
dans lequel lesdits moyens de mise à jour de réseau routier (100) comprennent :
une section de comparaison/collation (112) pour comparer/collationner des données de lieu desdites données d'emplacement avec lesdites données de réseau routier ; et
une section de mise à jour d'informations routières pour mettre à jour lesdites données de lieu en tant qu'informations routières si des données de route correspondant auxdites données de lieu n'ont pas été établies dans lesdites données de réseau routier sur la base d'un résultat de comparaison/collation.

2. Serveur pour mettre à jour des informations routières selon la revendication 1, dans lequel lesdits moyens de mise à jour de données de réseau routier (100) comprennent en outre :
une section de décision de mise à jour d'informations routières pour décider desdites données de lieu en tant qu'informations routières à mettre à jour si les données de lieu obtenues par un nombre prescrit d'unités terminales ont sensiblement le même lieu.

3. Procédé de mise à jour d'informations routières dans un système de fourniture d'informations de carte pour fournir des informations routières souhaitées à partir d'un site de réseau routier dans lequel des données de réseau routier sont élaborées conformément à une demande provenant de chacune des unités terminales connectées au site de réseau par l'intermédiaire d'un réseau de communication, le procédé étant **caractérisé en ce qu'**il comprend les étapes consistant à :
dans ledit site de réseau routier,
recevoir (S91) des données d'emplacement actuel de ladite unité terminale par l'intermédiaire d'un réseau ;
créer (S92) des données de lieu sur la base des données d'emplacement actuel reçues ; et
mettre à jour (S96) lesdites données de réseau routier sur la base desdites données de lieu en :
comparer/collationner des données de lieu basées sur lesdites données d'emplacement avec lesdites données de réseau routier ; et
mettre à jour lesdites données de lieu en tant qu'informations routières si une route correspondant auxdites données de lieu n'est pas établie en tant que données de réseau routier sur la base d'un résultat de comparaison/collation.

4. Procédé de mise à jour d'informations routières selon la revendication 3, comprenant en outre l'étape consistant à :
décider desdites données de lieu en tant qu'informations routières à mettre à jour sur la base de la comparaison/collation si les données de lieu obtenues par un nombre prescrit d'unités terminales ont sensiblement le même lieu.

5. Procédé de mise à jour d'informations routières selon la revendication 3, dans lequel lesdites informations de carte comprennent des données de noeuds indicatives d'informations de points sur une carte et des données de liens indicatives d'informations routières sur la carte, et ledit site de réseau routier corrèle ces données et transmet ces données corrélées en tant que données de route à mettre à jour à l'unité terminale conformément à une demande provenant de celle-ci.
